# EUROPEAN PATENT APPLICATION

(11) **EP 3 231 997 A1**
(43) Date of publication of application: **18.10.2017**
(21) Application number: 17166345.3
(22) Date of filing: 12.04.2017
(51) Int. Cl.: F01D 5/14

(54) **GAS TURBINE ENGINE AIRFOIL BLEED**

(30) Priority: 15.04.2016 US 201615099887
(71) Applicant: General Electric Company, Schenectady, NY 12345 (US)
(72) Inventor: JOHNSON, Steven Douglas, Cincinnati, OH Ohio 45215 (US)
(74) Representative: Williams, Andrew Richard

(57) **Abstract**

An apparatus and method of minimizing airfoil 90 boundary layer separation utilizing at least one bleed inlet 130 disposed on the outer wall 118 of the airfoil 90, such as the suction side 112, having at least one channel 132 disposed within an interior 120 of the airfoil 90 providing fluid communication between the bleed inlet 130 and the tip 96 of the airfoil 90. Bleed gas drawn through the bleed inlet 130 and provided to the tip 96 can pressurize a seal 142 disposed at the tip 96. Additionally, a flow control device 160 can be disposed within the channel 132 to control or meter the rate at which gas is bled into the channel 132.

## Description

### BACKGROUND

Turbine engines, and particularly gas or combustion turbine engines, consist of a compression system, a combustor and a turbine system. The turbine system extracts energy from a hot gas stream form the combustor form a multitude of stationary nozzles and rotating blades to drive the compression system as well as other engine components. Aviation turbofan engine are a type of gas turbine engine generally consisting of a fan, booster, compressor, combustor, high pressure turbine, and low pressure turbine. The high pressure turbine provides torque for the compressor while the low pressure turbine provides torque to drive the fan and booster, producing thrust for the aircraft.

Gas turbine engines include multiple airfoil shaped elements, commonly as rotating blades and stationary vanes moving or directing a flow of fluid through the engine. The airfoil shaped elements can have non-uniform pressure distributions on their surfaces during engine operation. As the number of airfoil elements in a particular blade row is reduced, the boundary layer of air passing along a suction side of the airfoils can tend toward separation due to increased blade loading. Thus, it is desirable to minimize boundary layer separation to maintain engine high efficiency while also minimizing the number of blades to keep engine weights down, important to aviation applications.

### BRIEF DESCRIPTION

In one aspect, the invention relates to an airfoil for a turbine engine including an outer wall bounding an interior and defining a pressure sidewall and a suction sidewall extending between a leading edge and a trailing edge to define a chord-wise direction and extending between a root and a tip to define a span-wise direction. The airfoil further includes at least one bleed inlet disposed in the outer wall, at least one channel disposed in the interior and in fluid communication with the at least one bleed inlet and open to the tip, and at least one flow control device disposed within the at least one channel.

In another aspect, the invention relates to a turbine engine including a rotor rotatable about an engine centerline and a plurality of airfoils in circumferential arrangement about the rotor. The airfoils include an outer wall bounding an interior and defining a pressure sidewall and a suction sidewall extending between a leading edge and a trailing edge to define a chord-wise direction and extending between a root and a tip to define a span-wise direction. The airfoils further includes at least one bleed inlet disposed in the outer wall and at least one channel disposed in the interior and in fluid communication with the at least one bleed inlet. The bleed inlets and channels provide an increase in a Zweifel loading coefficient of 10 - 40% corresponding to a reduction in solidity for the plurality of airfoils.

In yet another aspect, the invention relates to a method of reducing airflow separation along a turbine blade for a turbine engine. The method includes flowing air over the turbine blade to generate an increase in a Zweifel loading coefficient between 10 - 40% and bleeding a flow of fluid from a suction side of the turbine blade into an interior of the turbine blade.

### BRIEF DESCRIPTION OF THE DRAWINGS

In the drawings:
FIG. 1 is a schematic cross-sectional diagram of a gas turbine engine for an aircraft.
FIG. 2 is perspective view of an airfoil of the gas turbine engine of FIG. 1.
FIG. 3 is a cross-sectional view of the airfoil of FIG. 2.
FIG. 4 is a side view of the airfoil of FIG. 2 having bleed inlets.
FIG. 5 is a top view of the airfoil of FIG. 4 having bleed outlets in a tip of the airfoil.
FIG. 6 is a side view of the airfoil of FIG. 2 having an internal channel with a flow control device.
FIG. 7 is an enlarged view of the flow control device of FIG. 6.
FIG. 8 is an alternate flow control device that can be disposed in the internal channel of FIG. 6.
FIG. 9 is a flow chart illustrating a method of reducing airflow separation for the airfoil of FIG. 2.

### DETAILED DESCRIPTION

The described embodiments of the present invention are directed to minimizing boundary layer separation for an airflow passing along an airfoil in an engine. For purposes of illustration, the present invention will be described with respect to the turbine for an aircraft gas turbine engine. It will be understood, however, that the invention is not so limited and may have general applicability within an engine, including compressors, as well as in non-aircraft applications, such as other mobile applications and non-mobile industrial, commercial, and residential applications.

As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the rear or outlet of the engine relative to the engine centerline.

Additionally, as used herein, the terms "radial" or "radially" refer to a dimension extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present invention, and do not create limitations, particularly as to the position, orientation, or use of the invention. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

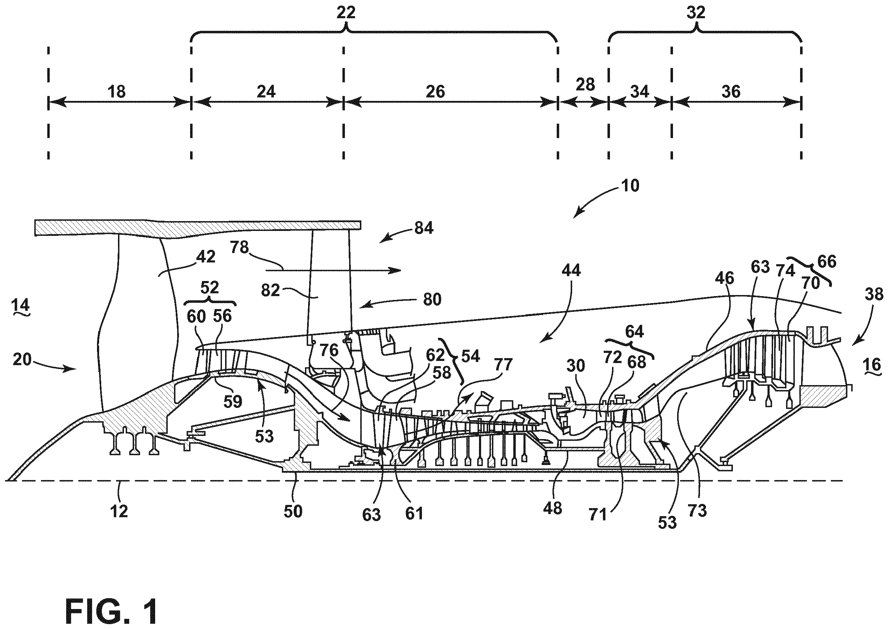

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating blades 56, 58. It is noted that the number of blades, vanes, and compressor stages shown in FIG. 1 were selected for illustrative purposes only, and that other numbers are possible.

The blades 56, 58 for a stage of the compressor can be mounted to a disk 59, which is mounted to the corresponding one of the HP and LP spools 48, 50, with each stage having its own disk 59, 61. The vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine vanes 72, 74 can be provided in a ring and can extend radially outwardly relative to the centerline 12, while the corresponding rotating blades 68, 70 are positioned downstream of and adjacent to the static turbine vanes 72, 74 and can also extend radially outwardly relative to the centerline 12, from a blade platform to a blade tip. It is noted that the number of blades, vanes, and turbine stages shown in FIG. 1 were selected for illustrative purposes only, and that other numbers are possible.

The blades 68, 70 for a stage of the turbine can be mounted to a disk 71, which is mounted to the corresponding one of the HP and LP spools 48, 50, with each stage having its own disk 71, 73. The vanes 72, 74 for a stage of the compressor can be mounted to the core casing 46 in a circumferential arrangement.

The portions of the engine 10 mounted to and rotating with either or both of the spools 48, 50 are also referred to individually or collectively as a rotor 53. The stationary portions of the engine 10 including portions mounted to the core casing 46 are also referred to individually or collectively as a stator 63.

In operation, the airflow exiting the fan section 18 is split such that a portion of the airflow is channeled into the LP compressor 24, which then supplies pressurized ambient air 76 to the HP compressor 26, which further pressurizes the ambient air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

A remaining portion of the airflow 78 bypasses the LP compressor 24 and engine core 44 and exits the engine assembly 10 through a stationary vane row, and more particularly an outlet guide vane assembly 80, comprising a plurality of airfoil guide vanes 82, at the fan exhaust side 84. More specifically, a circumferential row of radially extending airfoil guide vanes 82 are utilized adjacent the fan section 18 to exert some directional control of the airflow 78.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally the combustor 30 and components downstream of the combustor 30, especially the turbine section 32, with the HP turbine 34 being the hottest portion as it is directly downstream of the combustion section 28. Other sources of cooling fluid can be, but is not limited to, fluid discharged from the LP compressor 24 or the HP compressor 26. This fluid can be bleed air 77 which can include air drawn from the LP or HP compressors 24, 26 that bypasses the combustor 30 as cooling sources for the turbine section 32. This is a common engine configuration, not meant to be limiting.

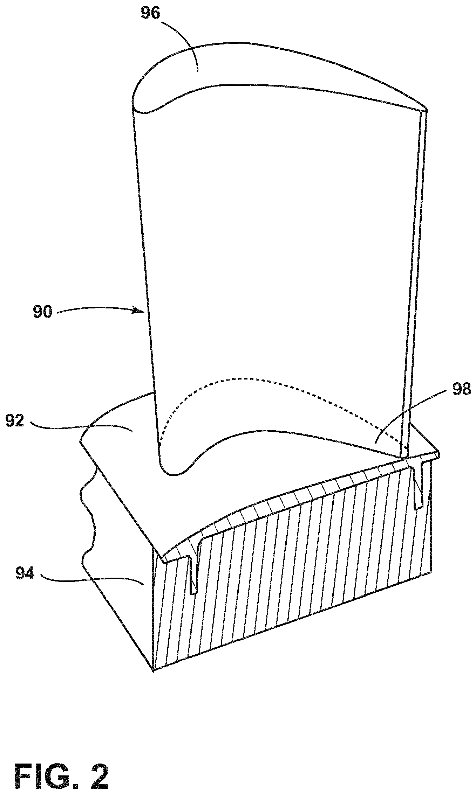

FIG. 2 is a perspective view of an airfoil 90 which can be a blade or vane of the engine 10 from FIG. 1. The airfoil 90 mounts to a platform 92 coupled to a dovetail 94. The airfoil 90 extends from a tip 96 to a root 98 defining a span-wise direction. The platform 92 can be integral with the airfoil 90 at the root 98, which helps to radially contain the engine airflow. The dovetail 94 can be configured to mount to the rotor 51 or disk 59, 61, 71, 73 on the engine 10. It should be appreciated that the dovetail 94 is shown in cross-section, but can comprise an annular element mounted to an annular rotor or disk. As such, the airfoil 90 can be a rotating or non-rotating element.

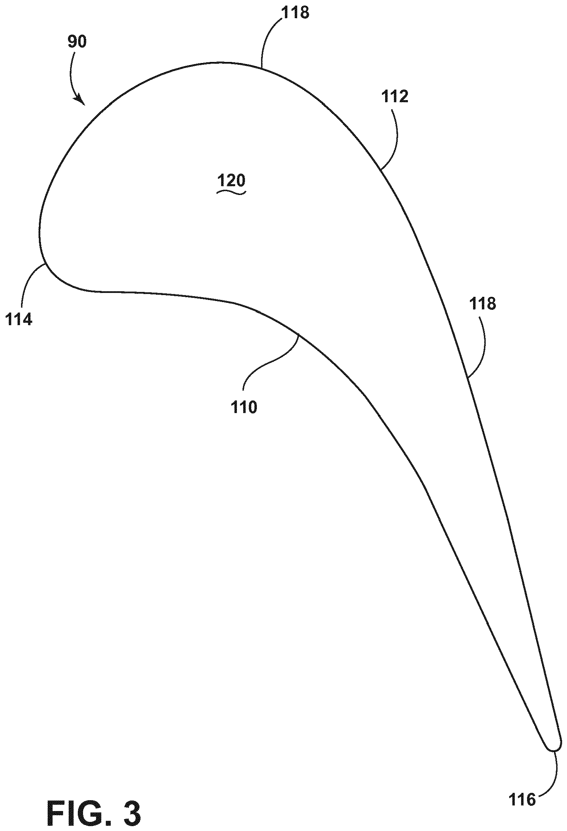

Turning to FIG. 3, the airfoil 90, shown in cross-section, has a concave-shaped pressure sidewall 110 and a convex-shaped suction sidewall 112 with a leading edge 114 and a trailing edge 116 defining a chord-wise direction therebetween. The pressure and suction sidewalls 110, 112 define an outer wall 118 bounding an interior 120. The airfoil 90 as a blade 68, for example, rotates in a direction such that the pressure sidewall 110 follows the suction sidewall 112. Thus, as shown in FIG. 3, the airfoil 90 would rotate upward toward the top of the page. As a stationary vane 72, the airfoil 90 would not rotate.

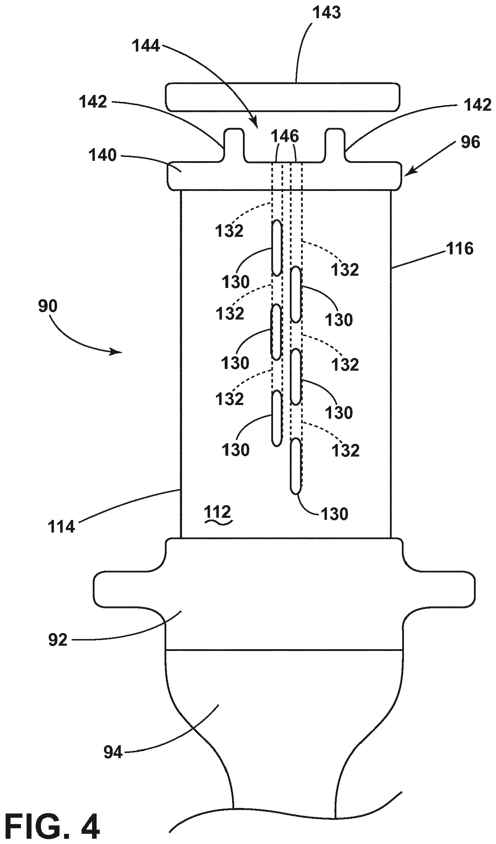

Turning now to FIG. 4, a side view the airfoil 90, showing the suction side 112, includes a plurality of bleed inlets 130. The bleed inlets 130 can be oval or elliptical shape, however, any shape is contemplated, such as circular, quadrilateral, unique, geometric, or otherwise. While only six bleed inlets 130 are shown, it should be understood that as few as one, or any number of bleed inlets 130 can be disposed on the airfoil 90. A plurality of channels 132 are disposed within the interior 120 of the airfoil 90. The bleed inlets 130 provide fluid communication between the exterior of the airfoil 90 and the channels 132. The channels 132 can be arcuate, linear, or a combination thereof, extending from the bleed inlets 130 toward the tip 96. In one particular example, the airfoil 90 can be a turbine blade. A further example can be an uncooled turbine blade providing interior space for the channels 132. Uncooled turbine blades are currently commonly found in the low pressure turbine.

The tip 96 further includes a tip shroud 140. The tip shroud 140 can be mounted to the end of the tip 96, or can be integral with the airfoil 90. The tip shroud 140 can include one or more tip baffles 142, often referred to as seal teeth, extending from the shroud 140. The tip baffles 142 act as a seal between the shroud 140 of the airfoil 90 and a sealing land 143. The sealing land 143, in one example, can be made of honeycomb-structured sheet metal and attached to the casing of the engine to minimize airfoil tip leakage. The tip baffles 142 are spaced from one another defining a tip cavity 144 between them. In an example utilizing more than two tip baffles 142, multiple tip cavities 144 can be defined between adjacent tip baffles 142. Pressurization of the tip cavity 144 can increase effectiveness of the seal created by the tip baffles 142 to improve engine efficiency by reducing tip leakage. While FIG. 4 illustrates the inclusion of the tip shroud 140, it should be understood that the airfoil 90 might not include the tip shroud 140.

A plurality of outlets 146 corresponding to the number of bleed inlets 130 and channels 132 can be disposed at the tip 96, having the outlets 146 spaced within the tip cavity 144 between the tip baffles 142. Thus, the channels 132 provide fluid communication for the exterior of the airfoil 90 at the suction side 112 to the tip 96 of the airfoil 90. It should be understood that it is contemplated that the outlets 146 can be disposed outside of the tip cavity 144, or even on the tip baffles 142. In addition, the channels 132 could coalesce into a lesser number of channels 132, such that fewer outlets 46 exist than inlets 130. Oppositely, the channels 132 could diverge into a greater number of channels 132, such that fewer inlets 130 exist than outlets 146.

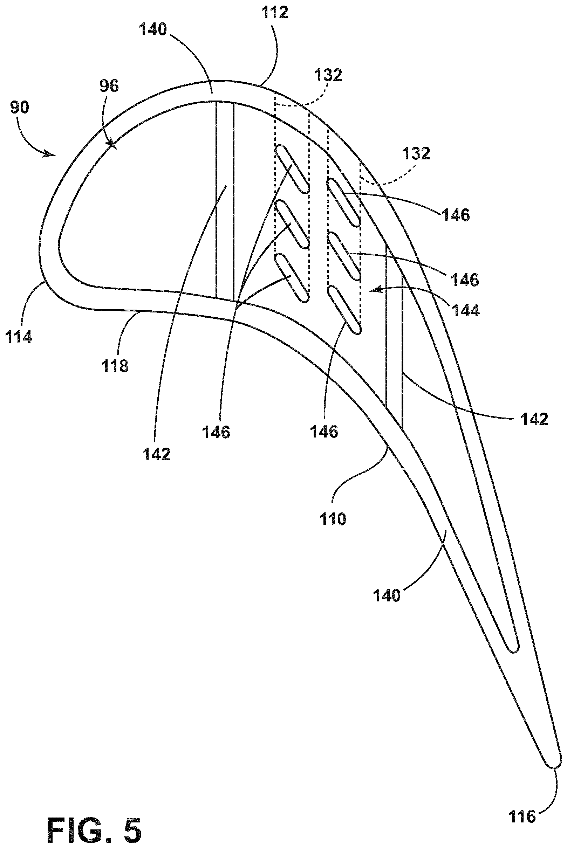

Referring now to FIG. 5, a top view of the tip 96 of the airfoil 90 illustrating the outlets 146 on the tip 96 disposed within the tip cavity 144. The outlets 146 can be shaped and patterned complementary to the bleed inlets 130. Alternatively, the outlets 146 can be shaped dissimilar to the bleed inlets 130, or can be patterned in an alternative manner. Furthermore, while it is illustrated that each bleed inlet 130 includes one complementary channel 132, and one complementary outlet 146, it is contemplated that there can be more or less channels 132 and outlets 146 that bleed inlets 130. For example, one bleed inlets 130 can fluidly couple to more than one channel 132 which exhausts at more than one outlet 146. In another example, two or more bleed inlets 130 can feed one channel 132 coupled to one outlet 146. As such, any number of bleed inlets 130, channels 132, and outlets 146 are contemplated. Additionally, the channels 132 need not exhaust fluid into the tip cavity 144, but could exhaust aft of the aft-most baffle 142 or forward of the forward-most baffle 142.

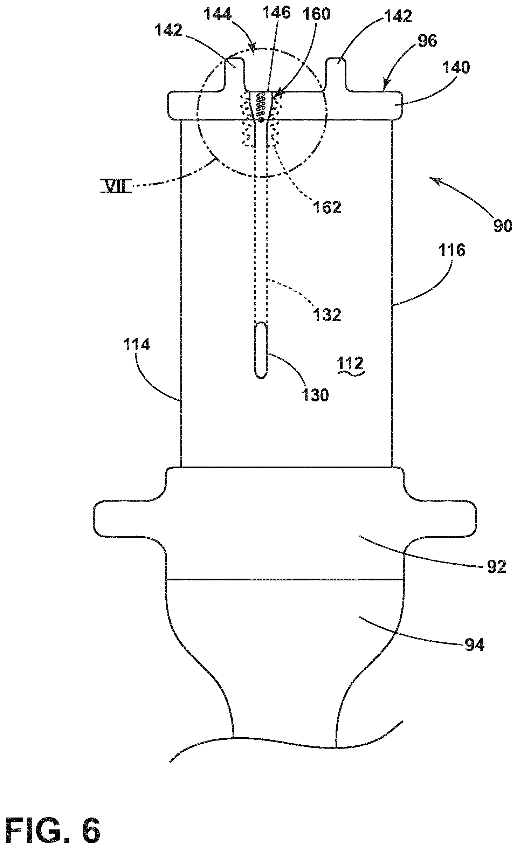

Referring now to FIG. 6, the channels 132 can further include a flow control device 160. The flow control device 160 can be disposed at the end of the channel 132 adjacent to the tip 96, while it is contemplated that the flow control device 160 can be positioned anywhere along the channel 132. The flow control device 160 can be integral with the airfoil 90, or with the channel 132. Alternatively, the flow control device 160 can be an individual unit that can be disposed in an outlet cavity 162 in the channel 132. In one example, the flow control device 160 can be threaded into the outlet cavity 162. Such an installation would facilitate maintenance or replacement, without servicing the entire airfoil 90. The flow control device 160 can be any device operable to meter or selectably permit the flow of fluid through the channels 132 such as a valve or other flow control devices. Examples of valves can include but are not limited to a check valve, centrifugal valve, centrifugal check valve, ball valve, gasket, spring valve, gate valve, needle valve, priority valve, logic valve, acceleration valve, deceleration valve, pressure valves, temperature valves, proportional and non-proportional flow control valves, or butterfly valve. Examples of other flow control devices can include, but are not limited to flow regulators, linear variable differential transformers, differential pressure systems, pressure-compensated variable flow valves, temperature-compensated variable flow valves, demand-compensated flow controls, flow dividers, combiners, rotary dividers, or solenoids. It should be appreciated that FIG. 6 as illustrated is exemplary and that while only a single bleed inlet 130, channel 132, and flow control device 160 are illustrated, any number of channels 132 having complementary flow control devices 160 are contemplated.

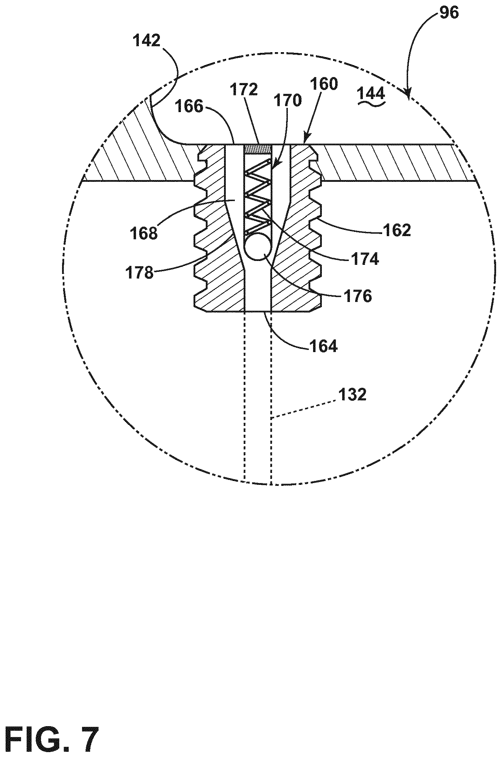

Turning now to FIG. 7, an enlarged view of section VII of FIG. 6 illustrates an exemplary flow control device 160 as a separate unit threaded within the airfoil 90. The flow control device 160 includes an inlet 164 sized complementary to the channel 132 and fluidly coupling the channel 132 to the flow control device 160. An outlet 166 is disposed adjacent the tip 96 and opposite of the inlet 164. The outlet 166 can be sized to have a greater cross-sectional area than the inlet 164, such that a passage 168 between inlet 164 and the outlet 166 defines an increasing cross-sectional area. Oppositely, the outlet 166 of the flow control device 160 could have a smaller flow area than the inlet 164, having a converging cross-sectional area toward the outlet 166. Additionally, the inlet 164 and outlet 166 flow areas could be identical. The flow passage 168 need not decrease or increase in cross-sectional area, but could be variable. For example, such variable cross-sectional areas can include converging-diverging, diverging-converging, diverging-converging-diverging, converging-diverging-converging, or any combination thereof. Additionally, the inlet 164 of the flow control device 160 could be larger or smaller in cross-sectional area than the channel 132.

A valve 170 can mount within the passage 168 for selectively opening and closing the passage 168 to permit or prevent a flow of fluid through the flow control device 160. A base 172 can mount along the outlet 166. A biasing member 174, such as a spring, can mount to the base 172 at one end, having a valve ball 176 located opposite of the base 172. The valve ball 176 can move relative to the biasing member 174 to selectively open or close the passage 168. If the passage 168 includes an increasing cross-sectional area from the inlet 164 toward the outlet 166, as seen in FIG. 7, actuation of the valve ball 176 can operate to meter a flow of fluid passing through the flow control device 160. Such metering, can include completely closing the flow control device 160, or allowing a variable flow rate of fluid to pass through the flow control device 160. As such, the flow rate of fluid drawn in the bleed inlet 130 can be controlled by the flow control device 160. Such control or actuation of the flow control device 160 can be accomplished, in one example, through the rotational speed of the airfoil 90, operating as a rotating blade. An increased rotational speed for the engine 10 can cause the ball 176 to be loaded radially outward away from the diverging walls 178, contracting the biasing member 174 and opening the valve 170 flow area. The greater the rotational speed, the further the valve ball 176 moves away from the walls 178 to permit a greater flow rate through the flow control device 160. As the rotational speed of the engine 10 slows, the biasing member 174 forces the valve ball 176 to return toward the inlet 164 to close the flow control device 160 or reduce the flow area thereof. Alternatively, the valve 170 can be actuated by the fluid pressure provided to the valve 170 through the bleed inlets 130. Such pressure can be determined based upon air pressures within the engine pressurized airflow 76. In another example, the walls 178 of the flow passage 168 could converge toward the outlet 166, such that the outlet 166 has a lesser cross-sectional area than the inlet 164.

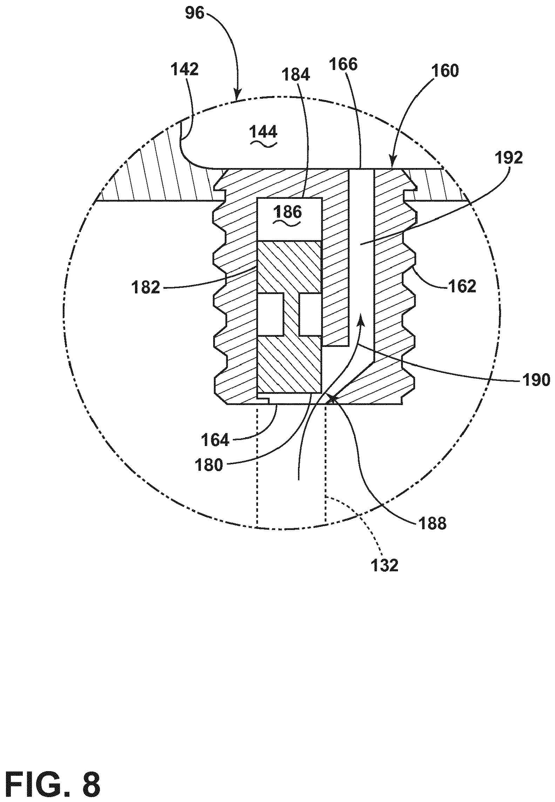

Referring now to FIG. 8, another flow control device 160 can alternatively include a pressure-compensated variable flow valve 180. The pressure-compensated variable flow valve 180 includes a slide member 182 disposed within an orifice 184 in the flow control device 160. A cavity 186 is defined behind the slide member 182 within the orifice 184. Actuation of the slide member 182 increases or decreases the volume of the cavity 186, which in turn can decrease or increase the pressure within the cavity 186.

As such, a pressure of air provided through the channel 132 can act upon the slide member 182. The greater the air pressure provided by the channel 132, the further the slide member 182 will recede into the cavity 186. Actuation of the slide member 182 can selectively open or close an opening 188 in the flow control device 160, permitting a predetermined flow of air 190 to pass into an outlet passage 192 which can be provided to the outlet 166. Alternatively, the slide member 182 can be actuated by the rotational speed of the airfoil 90 and the position of the slide member 182 can be determined by the rotational speed of the airfoil 90 and the pressure of the cavity 186. The greater the rotational speed of the airfoil 90, the greater the centrifugal force on the slide member 182 can be used to selectively open or close the opening 188 to increase or decrease the flow rate of air 190 passing through the flow control device 160.

It should be appreciated that the flow rates provided to or through the valves 170, 180 can be particularly tailored based upon designed engine speeds, or can be tuned to bleed a predetermined amount of air based upon the rate of increasing cross-sectional area of the passage 168 by the angle or orientation of the walls 178, the spring constant of the biasing member 174, or the cross-sectional areas of the inlet 164 or the outlet 166.

It should be appreciated that the bleed inlets 130, channels 132, outlets 146, and flow control devices 160 can be utilized to reduce boundary layer separation for airflow along the suction side 112 of the airfoil 90. During engine operation, a flow of air passing along the suction side 112 can have boundary layer separation for the airflow. The propensity for boundary layer separation increases as airfoil count in a particular airfoil row decreases or solidity decreases. While it is desirable to minimize blade count or solidity to minimize engine weight, the airflow boundary layer separation resultant of the reduced blade count decreases engine efficiency.

In order to permit a reduced blade count or a reduced blade solidity while providing similar efficiency as a blade row of conventional solidity, the bleed inlets 130 disposed on the suction sidewall 112 of the airfoil 90 bleed off a portion of the fluid flowing along the suction side 112 and provides the bled air through the channel 132 to the tip cavity 144 to pressurize the labyrinth seal at the tip shroud 140. Alternatively, the bled fluid can be exhausted aft of the labyrinth seal at the shroud 140, or forward thereof.

The bleeding of fluid at the bleed inlets 130 forces the boundary layer to remain attached at the suction side 112, maintaining a higher efficiency which might otherwise be lost with the lesser blade count or solidity.

Additionally, the flow control device 160 operates to control the rate at which the bleed air is drawn into the bleed inlets 130. Thus, the rate at which the bleed gas is drawn from the boundary layer at the suction side 112 can be optimized to draw only the required portion of gas to keep the boundary layer attached to the suction side, without drawing an excessive amount of gas which might otherwise impact the efficiency of the engine.

Zweifel number or Zweifel loading coefficient, provides for a method of comparing the loading on airfoils in a blade row. The Zweifel number is assessed to estimate the likelihood of boundary layer separation given a particular blade row's loading level. The Zweifel level Z is a measure of how closely the pressure distribution around the airfoil profile conforms to the ideal static pressure equal to the stagnation pressure along the pressure sidewall 110 and the exit static pressure along the suction sidewall 112. As such, the ideal pressures define a blade loading having a Zweifel number = 1.0. It is desirable to design turbine blade rows with higher loading and Zweifel numbers, as higher loading permits fewer blades to generate an equivalent amount of work. As such, fewer blades provides for reduce weight. It is desirable to maintain a properly attached suction side 112 boundary layer on the airfoil 90. As blade loading and Zweifel number increase, the propensity for separation also increases. To prevent separation, the bleed inlets 130 can draw a portion of the air flow along the suction side of the airfoil 90 forcing the boundary layer to remain attached. The bleed inlets 130 and flow rate drawn through the bleed inlets 130 can be adapted to define an increase in Zweifel number between 10-40 %.

Additionally, the airfoils 90 can further define a solidity for an entire circumferential arrangement of airfoils 90, such as a full blade row or row of stator of vanes. The solidity can be defined by the ratio of the airfoil chord, extending from the leading edge 114 to the trailing edge 116, to a spacing, also referred to as a pitch, at a given radial distance, being Solidity = Chord/Spacing (σ = C/S), where σ is solidity, C is chord, and S is the pitch or circumferential spacing. Thus, it should be appreciated that as the chord increases or decreases, the solidity σ, being directly proportional to chord, will increase or decrease respective of the chord. As spacing increases, the solidity will decrease, being inversely proportional to one another. Thus, utilizing a lesser number of airfoils 90 in a certain blade row will result in a decreased solidity.

Work output per stage is another important parameter in turbine design. A turbine stage is defined by an upstream nozzles which turns and accelerates the flow tangentially, followed by a downstream blade which rotates about the engine centerline 12 and turns the flow back toward an axial direction. All work produced by a turbine stage is produced by the blade. The rotating blade extracts energy from the fluid flowing through the blade row, converting thermal and kinetic energy into mechanical energy in the form of a rotating shaft and torque. Increasing the work output per turbine stage is desirable as it allows for a reduction in the total number of stages, reducing engine weight. However, as the work per stage increases, each blade row will be more highly loaded, having a greater propensity for suction side boundary layer separation. Such separation results in a reduction in engine efficiency.

The airfoils 90 as described in a particular circumferential arrangement, such as a rotor blade row or stator vane row, can be any number of airfoils 90. By utilizing the suction-side bleed openings 130, a blade row solidity could be decreased by 10-40% without having the resultant suction side boundary layer separation. In one example, this could correspond to a 10-40% decrease in the number of turbine blades maintaining blade chord.

In one example, a low pressure turbine rotor blade, having the bleed inlets 130, top channels, flow control devices 160, or any number or combination thereof, it can be understood that the airfoil 90 having an increase in Zweifel number between 10-40%, with a solidity decrease between 10-40%, having any number of airfoils 90 organized on the low pressure turbine rotor can result in decreased overall engine weight, while maintaining engine efficiency. Furthermore, during operation, the engine rotor can rotate at any rotational speed for which the flow control device 160 can be adapted to optimize the rate at which fluid is bled at the bleed inlets 130.

It should be understood that the Zweifel numbers, solidity, and airfoil count as listed are exemplary, and that particular values as described might increase or decrease with the particular engine. For example, an engine 10 having a larger diameter will necessarily require a larger blade count than an engine 10 having a lesser diameter. As such, the Zweifel number and solidity can change respective of the particular needs of the invention.

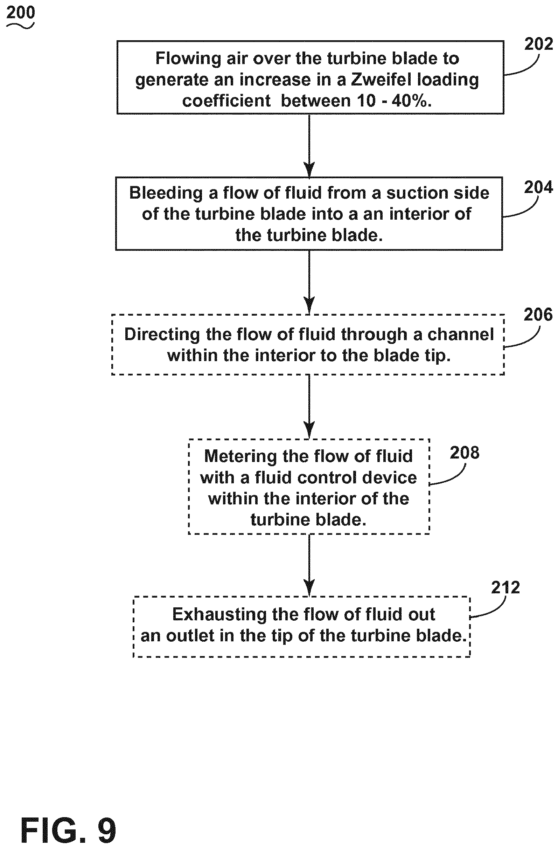

Referring now to FIG. 9, a method 200 of reducing airflow separation along a turbine blade for a turbine engine includes, at 202, flowing air over the turbine blade to generate an increase in Zweifel number between 10-40%. The air flow can move in an aft direction over both the pressure side 110 and the suction side 112 generating the desired Zweifel coefficient according to the particular blade row and airfoil design. At 204, the method 200 further includes bleeding a flow of fluid from the suction side 112 of the turbine blade into an interior of the turbine blade. The flow of fluid can be bled through the bleed inlets 130 in the suction side 112 of the airfoil 90, as illustrated in FIG. 4, and provided to the channels 132 disposed within the interior of the airfoil 90. As such, the bled gas can provide a higher the Zweifel number to be reached while preventing boundary layer separation of the gas flow at the suction side 112 of the airfoil 90.

Optionally, at 206, the flow of fluid can be directed through the channel 132 within the interior of the blade to the tip 96. At the tip 96, the flow of fluid can be exhausted, for example, into the tip cavity 144 to pressurize the labyrinth seal defined by the tip shroud 140 and baffles 142. From 206, optionally, at 208, the flow of fluid can be metered with the flow control device 160 within the interior of the turbine blade. As such the flow control device 160 can be used to permit a predetermined amount of fluid to be bled off at the bleed inlets 130 to maintain an attached boundary layer flow at the suction side 112 of the airfoil. The flow control device 160 can be tuned to bleed an appropriate amount of gas through the bleed inlets 130 to prevent boundary layer separation without bleeding an excessive amount of gas to negatively impact engine efficiency. Such tuning can be accomplished by adapting the walls 178 to control the variable cross-sectional area of the passage 168, or the spring constant of the biasing member 174 as well as the cross-sectional areas of the inlet 164 or the outlet 166.

Furthermore, at 212, the flow of fluid can optionally be exhausted through an outlet 146 at the tip 96 of the turbine blade. This exhaust flow can be used to pressurize the labyrinth seal created at the tip 96 by the tip shroud 140, baffle 142 and the tip cavity 144 defined therebetween.

It should be understood that the invention as described herein provides for maintaining an attached boundary layer flow of gas along the suction side of an airfoil. In reducing the count for a number of airfoils in circumferential arrangement to reduce system weight, the overall solidity is reduced which can lead to airflow separation along the airfoils. Providing bleed inlets on the suction side of the airfoil prevents the airflow separation, maintaining engine efficiency while permitting the decreased engine weight. Alternatively, the work output of individual blade rows could be increased with a changed or maintained Zweifel number and blade count. This may be desirable to permit a reduction in the total number of blade rows needed. Increasing the work done, and torque produced, increases the propensity of suction side boundary layer separation. However, the bleed openings 130 and channels 132 provides the bleeding of a portion of the flow over the suction side 112 of the airfoils 90 to keep the boundary layers attached, maintaining higher efficiency. Thus, for turbine designs requiring a multitude of turbine stages, this invention allows for a reduction in the number of turbine stages to reduce engine weight while maintaining similar engine efficiency.

It should be appreciated that application of the disclosed design is not limited to turbine engines with fan and booster sections, but is applicable to turbojets, turboprops, power-generating or machine operating gas turbines, turbomachines, and turbo engines as well.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An airfoil for a turbine engine, the airfoil comprising:
   an outer wall bounding an interior and defining a pressure sidewall and a suction sidewall extending between a leading edge and a trailing edge to define a chord-wise direction and extending between a root and a tip to define a span-wise direction;
   at least one bleed inlet disposed in the outer wall; and
   at least one channel disposed in the interior in fluid communication with the at least one bleed inlet and open to the tip.
2. The airfoil of clause 1, wherein the channel further comprises at least one outlet disposed in the tip.
3. The airfoil of any preceding clause, further comprising a tip shroud having one or more tip baffles disposed on the tip shroud to define a tip cavity.
4. The airfoil of any preceding clause, wherein the outlet is disposed within the tip cavity and between two baffles.
5. The airfoil of any preceding clause, further comprising at least one flow control device disposed within the at least one channel.
6. The airfoil of any preceding clause, wherein the at least one flow control device comprises one of a check valve, ball valve, gasket, spring valve, gate valve, needle valve, priority valve, logic valve, acceleration valve, deceleration valve, centrifugal check valve, pressure valve, temperature valve, proportional flow control valve, non-proportional flow control valve, or butterfly valve.
7. The airfoil of any preceding clause, wherein the at least one channel further includes an outlet cavity and the flow control device is disposed in the outlet cavity.
8. The airfoil of any preceding clause, wherein the flow control device is a centrifugal check valve.
9. The airfoil of any preceding clause, wherein the check valve is actuated by a fluid pressure provided from the at least one bleed opening.
10. The airfoil of any preceding clause, wherein the at least one bleed inlet is disposed on the suction side.
11. The airfoil of any preceding clause, wherein the airfoil comprises a turbine blade.
12. The airfoil of any preceding clause, wherein the turbine blade is an uncooled low pressure turbine blade.
13. A turbine engine comprising:
   a rotor rotatable about an engine centerline; and
   a plurality of airfoils in circumferential arrangement about the rotor, the airfoils comprising:
      an outer wall bounding an interior and defining a pressure sidewall and a suction sidewall extending between a leading edge and a trailing edge to define a chord-wise direction and extending between a root and a tip to define a span-wise direction,
      at least one bleed inlet disposed in the outer wall, and
      at least one channel disposed in the interior and in fluid communication with the at least one bleed inlet;
   wherein the bleed inlets and channels provide an increase in a Zweifel loading coefficient of between 10-40% corresponding to a 10-40% reduction in solidity for the plurality of airfoils.
14. The turbine engine of any preceding clause, wherein the Zweifel loading coefficient increases between 20-30%.
15. The turbine engine of any preceding clause, further comprising at least one outlet disposed in the tip and in fluid communication with the at least one channel.
16. The turbine engine of any preceding clause, further comprising at least one flow control device disposed within the at least one channel.
17. The turbine engine of any preceding clause, wherein the at least one bleed inlet is disposed on the suction side.
18. The turbine engine of any preceding clause, wherein the airfoil comprises a turbine blade.
19. The turbine engine of any preceding clause, wherein the turbine blade is uncooled low pressure turbine blade.
20. A method of reducing airflow separation along a turbine blade for a turbine engine, the method comprising:
   flowing air over the turbine blade to generate an increase in a Zweifel loading coefficient between 10-40%; and
   bleeding a flow of fluid from a suction side of the turbine blade into an interior of the turbine blade.
21. The method of any preceding clause, further comprising directing the flow of fluid through a channel within the interior of the turbine blade to a tip of the turbine blade.
22. The method of any preceding clause, further comprising exhausting the flow of fluid from the channel through an outlet in the tip of the turbine blade.
23. The method of any preceding clause, further comprising metering the flow of fluid through the channel with a flow control device.
24. The method of any preceding clause, wherein metering the flow of fluid further comprises actuating the flow control device based upon rotational speed of the turbine blade.
25. The method of any preceding clause, wherein metering the flow of fluid further comprises actuating the flow control device based upon a pressure of the fluid or the difference in pressures upstream and downstream of the flow control device.

## Claims

1. An airfoil (90) for a turbine engine (10), the airfoil (90) comprising:
an outer wall (118) bounding an interior (120) and defining a pressure sidewall (110) and a suction sidewall (112) extending between a leading edge (114) and a trailing edge (116) to define a chord-wise direction and extending between a root (98) and a tip (96) to define a span-wise direction;
at least one bleed inlet (130) disposed in the outer wall (118); and
at least one channel (132) disposed in the interior (120) in fluid communication with the at least one bleed inlet (130) and open to the tip (96).

2. The airfoil (90) of claim 1, wherein the channel (132) further comprises at least one outlet (146) disposed in the tip (96).

3. The airfoil (90) of claim 2, further comprising a tip shroud (140) having one or more tip baffles (142) disposed on the tip shroud (140) to define a tip cavity (144).

4. The airfoil (90) of claim 3, wherein the outlet (146) is disposed within the tip cavity (144) and between two baffles (142).

5. The airfoil (90) of any preceding claim, further comprising at least one flow control device (160) disposed within the at least one channel (132).

6. The airfoil (90) of claim 5, wherein the at least one flow control device (160) comprises one of a check valve, ball valve, gasket, spring valve, gate valve, needle valve, priority valve, logic valve, acceleration valve, deceleration valve, centrifugal check valve, pressure valve, temperature valve, proportional flow control valve, non-proportional flow control valve, or butterfly valve.

7. The airfoil (90) of either of claim 5 or 6, wherein the at least one channel (132) further includes an outlet cavity (162) and the flow control device (160) is disposed in the outlet cavity (162).

8. The airfoil of claim 7, wherein the flow control device is a centrifugal check valve, and wherein the check valve is actuated by a fluid pressure provided from the at least one bleed opening.

9. The airfoil (90) of any preceding claim, wherein the at least one bleed inlet (130) is disposed on the suction side (112).

10. The airfoil (90) of any preceding claim, wherein the airfoil (90) is an uncooled low pressure turbine blade.
